Europäisches Patentamt

European Patent Office

Office européen des brevets

(11) Publication number: **0 249 376 B1**

# EUROPEAN PATENT SPECIFICATION

(45) Date of publication of patent specification: **05.02.92**  (51) Int. Cl.⁵: **E01C 5/00**, E01C 5/04

(21) Application number: **87304857.3**

(22) Date of filing: **02.06.87**

(54) **Paviors.**

(30) Priority: **03.06.86 GB 8613419**
**17.07.86 GB 8617480**

(43) Date of publication of application:
**16.12.87 Bulletin  87/51**

(45) Publication of the grant of the patent:
**05.02.92 Bulletin  92/06**

(84) Designated Contracting States:
**BE DE FR IT NL SE**

(56) References cited:
**DE-A- 2 357 854**
**DE-C- 571 570**
**FR-A- 578 376**
**FR-A- 859 362**

(73) Proprietor: **Knox, Colin James Michael**
**Southbrook House**
**Bovey Tracey, Devon TO13 9NB(GB)**

(72) Inventor: **Knox, Colin James Michael**
**Southbrook House**
**Bovey Tracey, Devon TO13 9NB(GB)**

(74) Representative: **Rees, David Christopher et al**
**Kilburn & Strode 30 John Street**
**London WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to paving elements or paviors, that is paving elements used to pave areas of ground.

Commonly, paving elements are generally rectangular or cuboidal and are made from fired clay, having dimensions of 102.5mm by 215mm and a constant thickness of 50mm, though other sizes are known.

Paving elements are generally laid in one of two ways, namely, dry laying and wet laying. With dry laying, the paving elements are simply bedded in sand and are not positively held in position other than by adjacent paving elements and, ultimately, edge restraints at the perimeter of the paved area. With wet laying, the paving elements are laid in wet mortar.

One of the difficulties associated with laying paving elements is that considerable pressure is required to force the flat undersurface of each element into the bedding. This is accompanied in wet paving by the fact that it is difficult to judge how far into the mortar the paving elements must be pressed, so that the wet mortar tends to ooze up in the customary 10mm gap between adjacent paving elements and stains the face of the paving elements. These stains can be particularly difficult to remove and mar the aesthetic appearance of the paved area.

One proposed solution to the wet laying problems is to post-point the paving elements. Thus, the paving elements are merely placed in position on top of the wet mortar and the gaps between adjacent elements are filled in with mortar subsequently. However, this is fairly troublesome and makes it difficult to achieve rebated joints, which are often desirable to lead away rainwater from the surface of the paved area.

FR-578376 shows a composite artificial stone for paving in which a facing of crushed durable material is supported on a plinth. The underside of the plinth includes a large flat base and recessed sides.

FR-859362 shows artificial stones for providing a foundation for a roadway. Each stone consists of a long pointed pyramidic section which is driven into the ground prior to the application of a covering of asphalt.

DE-A-2357854 shows a paving system in which the elements are alternatively arranged one way up and the other way up to provide a layer to be placed on top of the ground.

It is an object of the present invention to provide a paving system in which the paving elements can be sunk more easily into the bedding.

It is a further object of the invention to avoid mortar ooze, and the subsequent staining, in the case of wet laying.

According to the present invention, there is provided a paving element for paving areas of ground, the paving element having a generally flat upper surface, generally vertical side walls and an undersurface, characterised in that the under surface comprises a series of inclined faces or chamfers corresponding in number to the side walls and extending upwards and outwards from a small flat surface at the central region of the undersurface to the side walls.

Thus, when laid, the paving elements can sink fairly easily into the bedding with relatively little displacement of the bedding material, dry or wet.

The presence of the inclined faces or chamfers extending upwards and outwards from the central region to the edges also means that the under surface contour provides complementary profiles which enable the paving elements to be easily stacked and packed using conventional shrink wrapping techniques in order to allow easy bulk transport.

The small flat surface is preferable to the inclined faces coming to an apex since it would be more prone to damage and would tend to over balance unless supported, during handling etc.

The inclined faces do not extend as far as the top surface of the paving elements but terminate short of the top surface thus defining the vertically extending side walls. THus, when the paving elements are bedded into mortar, under light pressure, the mortar can be allowed to "rise" up the inclined surfaces until it reaches the vertical side walls. No further bedding will then be necessary, leaving the paving elements in position with a rebated joint between them. As will be appreciated no post-pointing will be called for.

A paving element in accordance with the present invention may be made of any suitable material. Particularly appropriate materials include concrete, calcium silicate, fired clays and reconstituted stone or other material. The use of fired clay is preferred.

The invention may be carried into practice in various ways and one embodiment will now be described by way of example with reference to the accompanying drawings in which :-

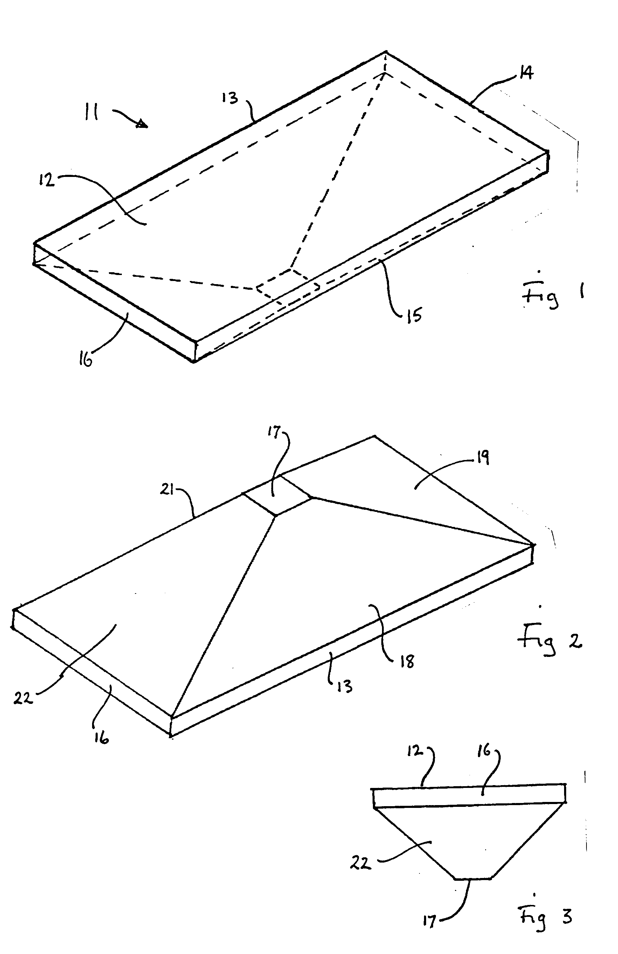

Figure 1 is a perspective view, from above, of a paving element in accordance with the invention;

Figure 2 is a perspective view, from beneath, of the paving element of Figure 1; and

Figure 3 is an end elevation of the paving element of Figure 1.

The paving element 11 is generally rectangular and made from clay in the customary manner. It is 215mm long, 102.5mm wide and has a flat top surface 12. It has four vertical side walls 13, 14, 15, 16, 10mm deep.

The under side consists of a small flat 20mm square 17 at the centre and four inclined faces 18, 19, 21, 22 extending upwards through 40mm from the square 17 and outwards to the side walls 13, 14, 15, 16.

## Claims

1. A paving element (11) for paving areas of ground, the paving element having a generally flat upper surface (12), generally vertical side walls (13, 14, 15, 16) and an undersurface, characterised in that the under surface comprises a series of inclined faces or chamfers (18, 19, 21, 22) corresponding in numbers to the side walls (13, 14, 15, 16) and extending upwards and outwards from a small flat surface (17) at the central region of the undersurface to the side walls.

## Revendications

1. Elément de pavement 11 pour le pavage des surfaces de terrain, l'élément de pavement ayant une surface supérieure (12) généralement plane, des parois latérales (13, 14, 15, 16) généralement verticales et une surface inférieure, **caractérisé en ce que** la surface inférieure comporte une série de faces inclinées ou de chanfreins (18, 19, 21, 22) correspondant au nombre de parois latérales (13, 14, 15, 16) et allant vers le haut et l'extérieur à partir d'une petite surface plane (17) en zone centrale de la surface inférieure jusqu'aux parois latérales.

## Patentansprüche

1. Pflasterelement (11) zum Pflastern von Bodengebieten, in dem das Pflasterelement eine im allgemeinen flache obere Fläche (12), im allgemeinen senkrechte Seitenwände (13, 14, 15, 16) und eine untere Fläche hat, dadurch gekennzeichnet, dass die untere Fläche eine Reihe von geneigten Flächen oder Abschrägungen (18, 19, 21, 22) umfasst, die den Seitenwänden (13, 14, 15, 16) in Anzahl entsprechen und sich nach oben und aussen von einer kleinen flachen Fläche (17) in dem zentralen Bereich der unteren Fläche zu den Seitenwänden erstreckt.

Fig 1

Fig 2

Fig 3